# EUROPEAN PATENT APPLICATION

(11) **EP 4 764 236 A1**
(43) Date of publication of application: **24.06.2026**
(21) Application number: 23905258.2
(22) Date of filing: 02.08.2023
(51) Int. Cl.: F16C 11/04, B25J 17/00, F16M 11/06

(54) **MOTION SYSTEM**

(71) Applicant: Shanghai Lingzhuan Technology Co., Ltd., Shanghai 200241 (CN)
(72) Inventor: DENG, Meimei, Shanghai 200241 (CN)
(74) Representative: Meyer-Dulheuer MD Legal Patentanwälte PartG mbB
(86) International application number: PCT/CN2023/110859
(87) International publication number: WO 2024/131077

(57) **Abstract**

Provided by an embodiment of the present disclosure is a motion system, including a first connecting disc, a second connecting disc, and a first motion module, a second motion module and a rotating assembly arranged between the first connecting disc and the second connecting disc. The first motion module and the second motion module are oppositely arranged and are both connected with the rotating assembly. The first motion module includes a first component and a second component connected with each other. Two opposite ends of the first component are rotatably connected with the second connecting disc and one end of the second component, respectively. One end, away from the first component, of the second component is rotatably connected with the rotating assembly. The second motion module includes a third component and a fourth component connected with each other. Two opposite ends of the third component are rotatably connected with the second connecting disc and one end of the fourth component, respectively, and one end, away from the third component, of the fourth component is rotatably connected with the rotating assembly. According to the present disclosure, a load from a supported object can be distributed in two directions, thereby reducing the stress on the first motion module and the stress on the second motion module.

## Description

### TECHNICAL FIELD

The present disclosure relates to the technical field of motion systems, and in particular to a rotary motion system.

### BACKGROUND

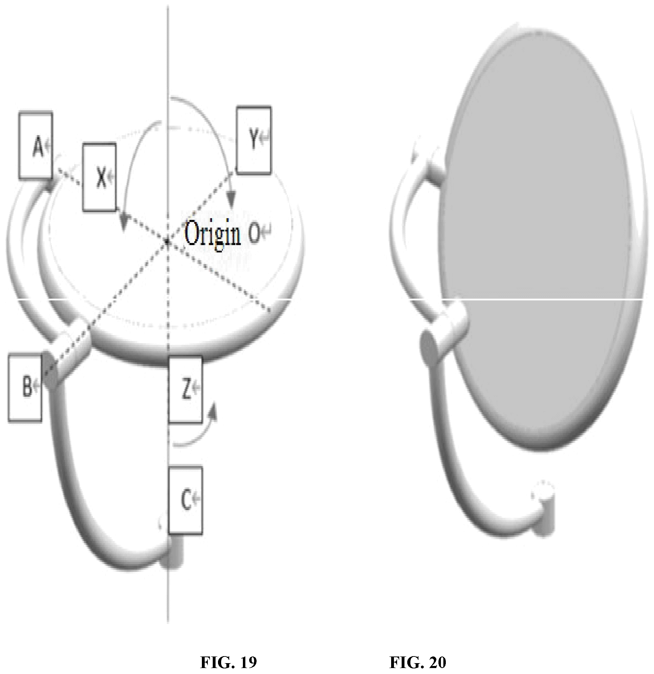

A cardan joint is a pivot support that allows an object to rotate around an axis. A set of three cardan joints, mounted one on top of the other with orthogonal pivots, allows an object mounted on the innermost cardan joint to be rotationally independent of the bracket of the cardan joint. In FIG. 19, the traditional joint has platform rotation axes X, Y and Z. The rotation of the platform around axes X, Y and Z is achieved by three vertical cardan joint rotations A, B and C. This is a traditional orthogonal cardan joint.

However, the payload of the orthogonal cardan joint is limited due to the long arm of the cardan joint . In addition, in some platform directions, as shown in FIG. 20, the cardan joint blocks the field of view of the payload on the platform, which is related to the applications such as radars, video cameras, and cameras.

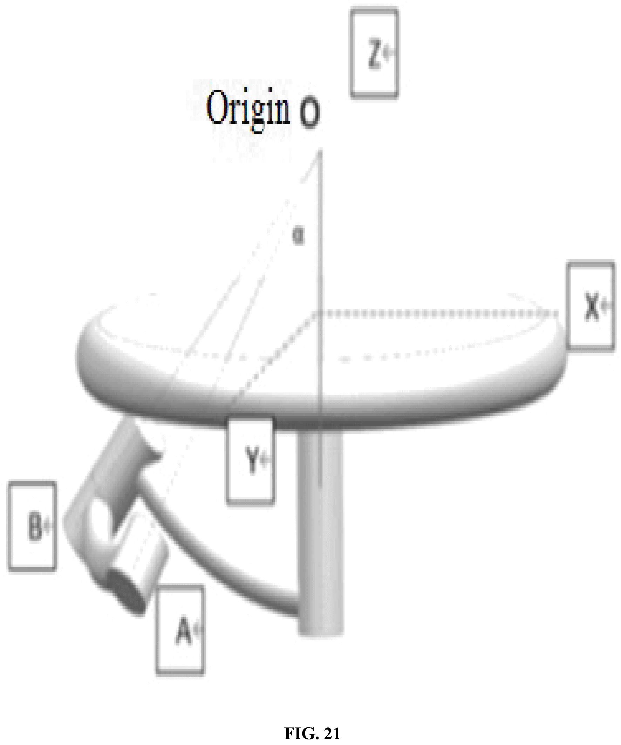

The present disclosure provides a cardan joint with a non-orthogonal cardan joint axis, and an angle α thereof is between 0° and 90°, as shown in FIG. 21, so as to alleviate these shortcomings. The angle α is defined as the angle between the axes of the cardan joint rotations A and B and the axis of the vertical cardan joint rotation C. An angle α of 90° represents the traditional orthogonal cardan joint. The rotation of the platform around the axes X and Y is achieved through composite rotations A and B of the non-orthogonal cardan joint arms. A and B can rotate to any angle, but the rotation of the platform around X and Y will never exceed twice the angle α.

In many applications, high positional accuracy, range control, a high payload-to-weight ratio and a high payload-to-volume ratio are all more important than working range, and non-orthogonal cardan joints are a better choice than traditional orthogonal cardan joints. The shorter arm of the cardan joint support higher payload weight and volume capacity.

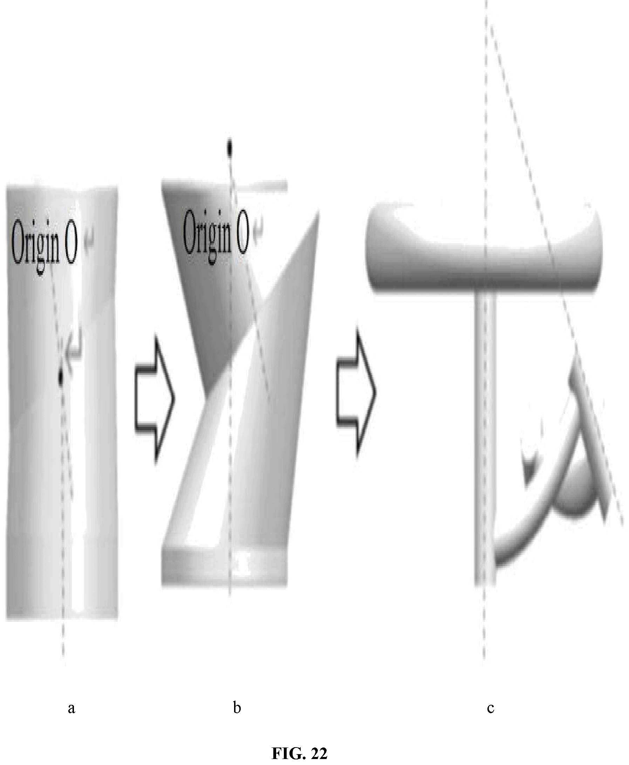

As described in the patent PCT/CN 2022/082279 (WO2023040229A1), a non-orthogonal cardan joint is developed from a rotary joint with two rotating components, which can slide by tilting at an angle of α. The payload rotates around an origin O, depending on the controlled rotation of the rotating components, as shown in FIG. 22a. The virtual rotation origin O is defined by the intersection of rotation axes of two rotating components, which can be modified by configuring the rotation axes of the rotating components, as shown in FIG. 22b. FIG. 22c and FIG. 22b are actually the same, but the rotating components are replaced by arms and joints. FIG. 22c represents a non-orthogonal cardan joint with an angle of α.

In the patent US11346495B2, a control system for a non-orthogonal cardan joint is described. The control system is used as a stabilization system for a video camera and video equipment. However, in other applications, non-orthogonal cardan joints are very rare.

### SUMMARY

In order to solve one or more technical problems in the prior art, a motion system is provided by embodiments of the present disclosure.

In order to achieve the above-mentioned objective, the technical solutions adopted by the present disclosure for solving the technical problem are as follows.

A motion system is provided, including a first connecting disc, a second connecting disc, and a first motion module, a second motion module and a rotating assembly arranged between the first connecting disc and the second connecting disc.

The first motion module and the second motion module are oppositely arranged and are both connected with the rotating assembly.

The first motion module includes a first component and a second component which are connected with each other, two opposite ends of the first component are rotatably connected with the second connecting disc and one end of the second component, respectively. One end, away from the first component, of the second component is rotatably connected with the rotating assembly.

The second motion module includes a third component and a fourth component which are connected with each other, two opposite ends of the third component are rotatably connected with the second connecting disc and one end of the fourth component, respectively. One end, away from the third component, of the fourth component is rotatably connected with the rotating assembly.

In a specific embodiment, the rotating assembly includes a first connecting shaft, and a first pillow block bearing and a second pillow block bearing which are sleeved on the first connecting shaft.

The first connecting disc is sleeved on the first connecting shaft, and located above the first pillow block bearing and the second pillow block bearing.

One end, away from the first component, of the second component is sleeved on the first connecting shaft and connected with an outer ring of the first pillow block bearing.

One end, away from the third component, of the fourth component is sleeved on the first connecting shaft and connected with an outer ring of the second pillow block bearing.

In a specific embodiment, the first motion module further includes a first connecting mechanism. The first connecting mechanism includes a second connecting shaft, and a third pillow block bearing and a fourth pillow block bearing which are sleeved on the second connecting shaft.

One end, adjacent to the first component, of the second component is sleeved on the second connecting shaft and is connected with an outer ring of the third pillow block bearing.

One end, adjacent to the second component, of the first component is sleeved on the second connecting shaft and is connected with an outer ring of the fourth pillow block bearing.

In a specific embodiment, the first motion module further includes a second connecting mechanism. The second connecting mechanism includes a third connecting shaft, and a fifth pillow block bearing sleeved on the third connecting shaft.

One end, away from the second component, of the first component is sleeved on the third connecting shaft and is connected with an outer ring of the fifth pillow block bearing.

One end, adjacent to the first component, of the second connecting disc is sleeved on the third connecting shaft.

In a specific embodiment, the second motion module further includes a third connecting mechanism. The third connecting mechanism includes a fourth connecting shaft, and a sixth pillow block bearing and a seventh pillow block bearing which are sleeved on the fourth connecting shaft.

One end, adjacent to the third component, of the fourth component is sleeved on the fourth connecting shaft and is connected with an outer ring of the sixth pillow block bearing.

One end, adjacent to the fourth component, of the third component is sleeved on the fourth connecting shaft and is connected with an outer ring of the seventh pillow block bearing.

In a specific embodiment, the second motion module further includes a fourth connecting mechanism. The fourth connecting mechanism includes a fifth connecting shaft, and an eighth pillow block bearing sleeved on the fifth connecting shaft.

One end, away from the fourth component, of the third component is sleeved on the fifth connecting shaft and is connected with an outer ring of the eighth pillow block bearing.

One end, adjacent to the third component, of the second connecting disc is sleeved on the fifth connecting shaft.

In a specific embodiment, the rotating assembly includes a gear assembly and a first bearing assembly connected with each other.

One end, away from the first component, of the second component is embedded inside the first bearing assembly and is abutted against the gear assembly.

One end, away from the third component, of the fourth component is sleeved outside the first bearing assembly and is abutted against the gear assembly.

In a specific embodiment, the gear assembly includes a gear, and a connector. The gear is connected with the first bearing assembly through the connector.

An outer gear ring in fitting with the gear is provided at one end, abutting against the gear assembly, of the second component.

An inner gear ring in fitting with the gear is provided at one end, abutting against the gear assembly, of the fourth component.

In a specific embodiment, the first bearing assembly includes a first bearing, and a second bearing sleeved on an outer ring of the first bearing.

One end, away from the first component, of the second component is embedded inside an inner ring of the first bearing.

One end, away from the third component, of the fourth component is sleeved outside an outer ring of the second bearing.

The gear is connected with the outer ring of the first bearing and an inner ring of the second bearing through the connector.

In a specific embodiment, the first connecting disc is connected with the outer ring of the first bearing and the inner ring of the second bearing.

In a specific embodiment, the first motion module further includes a first connecting mechanism. The first connecting mechanism includes a second bearing assembly.

One end, adjacent to the first component, of the second component is embedded inside the second bearing assembly.

One end, adjacent to the second component, of the first component is sleeved outside the second bearing assembly.

In a specific embodiment, the first connecting mechanism further includes a first elastic element, and the first elastic element is arranged between the second component and the second bearing assembly.

In a specific embodiment, the first motion module further includes a second connecting mechanism. The second connecting mechanism includes a third bearing assembly.

One end, away from the second component, of the first component is sleeved outside the third bearing assembly.

One end, adjacent to the first component, of the second connecting disc is embedded inside the third bearing assembly.

In a specific embodiment, the second connecting mechanism further includes a second elastic element, and the second elastic element is arranged between the second connecting disc and the third bearing assembly.

In a specific embodiment, the second motion module further includes a third connecting mechanism. The third connecting mechanism includes a fourth bearing assembly.

One end, adjacent to the third component, of the fourth component is embedded inside the fourth bearing assembly.

One end, adjacent to the fourth component, of the third component is sleeved outside the fourth bearing assembly.

In a specific embodiment, the third connecting mechanism further includes a third elastic element, and the third elastic element is arranged between the fourth component and the third bearing assembly.

In a specific embodiment, the second motion module further includes a fourth connecting mechanism. The fourth connecting mechanism includes a fifth bearing assembly.

One end, away from the fourth component, of the third component is sleeved outside the fifth bearing assembly.

One end, adjacent to the third component, of the second connecting disc is embedded inside the fifth bearing assembly.

In a specific embodiment, the fourth connecting mechanism further includes a fourth elastic element. The fourth elastic element is arranged between the second connecting disc and the fifth bearing assembly.

In a specific embodiment, the first elastic element and/or the second elastic element and/or the third elastic element and/or the fourth elastic element include a spring, or a rubber block.

In a specific embodiment, the rotating assembly includes a gear assembly and a first bearing assembly connected with each other.

One end, away from the first component, of the second component is embedded inside the first bearing assembly.

One end, away from the third component, of the fourth component is sleeved outside the first bearing assembly and connected with the gear assembly.

In a specific embodiment, the gear assembly includes an inner gear ring, a gear train meshed with the inner gear ring, and a connector.

The gear train is connected with the first bearing assembly through the connector.

The inner gear ring is fixedly connected with the fourth component.

In a specific embodiment, the gear train includes a sun gear, and a plurality of planetary gears meshed with the sun gear.

In a specific embodiment, the first bearing assembly includes a first bearing, and a second bearing sleeved outside an outer ring of the first bearing.

One end, away from the first component, of the second component is embedded inside an inner ring of the first bearing.

One end, away from the third component, of the fourth component is sleeved outside an outer ring of the second bearing.

At least one gear in the gear train is connected with the outer ring of the first bearing and an inner ring of the second bearing through the connector.

In a specific embodiment, the rotating assembly includes a gear assembly and a first bearing assembly connected with each other.

One end, away from the first component, of the second component is embedded inside the first bearing assembly and is connected with the gear assembly.

One end, away from the third component, of the fourth component is sleeved outside the first bearing assembly and is connected with the gear assembly.

In a specific embodiment, the gear assembly includes a first inner gear ring, a second inner gear ring, a gear train meshed with the first inner gear ring and the second inner gear ring, and a connector.

At least one gear in the gear train is connected with the first bearing assembly through the connector.

The first inner gear ring is fixedly connected with the second component and meshed with one gear in the gear train.

The second inner gear ring is fixedly connected with the fourth component and meshed with another gear in the gear train.

In a specific embodiment, the first bearing assembly includes a first bearing, and a second bearing sleeved on an outer ring of the first bearing.

One end, away from the first component, of the second component is embedded inside an inner ring of the first bearing.

One end, away from the third component, of the fourth component is sleeved outside an outer ring of the second bearing.

One gear in the gear train is connected with the outer ring of the first bearing and an inner ring of the second bearing through the connector.

In a specific embodiment, the first connecting disc is connected with the first bearing assembly.

In a specific embodiment, the rotating assembly includes a gear assembly, and two first bearing assemblies.

One end, away from the first component, of the second component is sleeved outside one of the first bearing assemblies.

One end, away from the third component, of the fourth component is sleeved outside the other first bearing assembly.

One end, away from the first component, of the second component is abutted against one end, away from the third component, of the fourth component through the gear assembly.

In a specific embodiment, the gear assembly includes a first outer gear ring arranged at one end, away from the first component, of the second component, and a second outer gear ring arranged at one end, away from the third component, of the fourth component.

The first outer gear ring is meshed with the second outer gear ring.

In a specific embodiment, each first bearing assembly includes a connecting pillar, a first bearing, and a second bearing.

The first bearing and the second bearing are sleeved on the connecting pillar, and inner rings of the first bearing and the second bearing are connected with the connecting pillar.

One end, away from the first component, of the second component, or one end, away from the third component, of the fourth component is sleeved outside the first bearing and the second bearing, and is connected with the outer ring of the first bearing and the outer rings of the second bearing.

In a specific embodiment, the first connecting disc is connected with the first bearing assembly.

In a specific embodiment, the motion system further includes a first connecting rod assembly, a second connecting rod assembly, and a rotary transmission disc.

Rotating shafts of the first component and the second component, which rotate relative to each other, are coaxially disposed with the rotary transmission disc, and the rotary transmission disc can rotate relative to the first component and the second component.

One end of the first connecting rod assembly is connected with the rotary transmission disc through a ball joint, and the other end of the first connecting rod assembly is controlled relative to a position of the rotating shaft between the first component and the second connecting disc.

One end of the second connecting rod assembly is connected with the rotary transmission disc through a ball joint, and an other end of the second connecting rod assembly is connected with the rotating assembly through a ball joint.

In a specific embodiment, the other end of the second connecting rod assembly is fixed to the second connecting disc.

In a specific embodiment, the motion system further includes a driving disc.

Rotating shafts of the first component and the second connecting disc, which rotate relative to each other, are coaxially disposed with the driving disc, the driving disc is able to rotate relative to the first component and the second connecting disc, and the driving disc is able to be controlled to rotate around a rotating shaft thereof.

The technical solutions provided by the embodiments of the present disclosure have the beneficial effects as follows:

A motion system provided by the embodiment of the present disclosure includes a first connecting disc, a second connecting disc, and a first motion module, a second motion module and a rotating assembly arranged between the first connecting disc and the second connecting disc. The first motion module and the second motion module are oppositely arranged and both connected with the rotating assembly. The first motion module includes a first component and a second component which are connected with each other, and two opposite ends of the first component are rotatably connected with the second connecting disc and one end of the second component, respectively; and one end, away from the first component, of the second component is rotatably connected with the rotating assembly. The second motion module includes a third component and a fourth component connected with each other. Two opposite ends of the third component are rotatably connected with the second connecting disc and one end of the fourth component, respectively; and one end, away from the third component, of the fourth component is rotatably connected with the rotating assembly. By providing the first motion module and the second motion module opposite to each other, the first motion module and the second motion module are enabled to have opposite and asymmetric motion ranges, and the motion system can distribute a load from a supported object to two directions, thereby reducing the first motion module and the stress on the first motion module. Compared with the traditional orthogonal cardan joint rotation system, the motion system provided by the embodiment has a shorter arm, thus improving payload weight and volume capacity, especially in a limited volume or operating space. In other aspects, the motion system also has high positioning accuracy and low motor load caused by external load and vibration.

All products in the embodiment do not need to have all the above-mentioned effects. The motion system provided by the embodiment can be used for non-orthogonal cardan joints, especially the non-orthogonal cardan joints for rotating or supporting purposes. The application includes but is not limited to tripod heads, chairs, cameras, entertainment devices, sports or rehabilitation training equipment, household appliances, industrial robots, automobiles and solar tracking systems.

### BRIEF DESCRIPTION OF THE DRAWINGS

To illustrate the technical solutions of the embodiments of the present disclosure more clearly, the drawings used for the description of the embodiments of the present disclosure are briefly introduced below. Apparently, the drawings in the following description show merely some embodiments of the present disclosure, and those of ordinary skill in the art may still derive other drawings from these drawings without creative efforts.
FIG. 1 is a schematic structural view of a motion system provided by Embodiment 1 of the present disclosure;
FIG. 2 is an exploded view of the motion system provided by Embodiment 1 of the present disclosure;
FIG. 3 is a schematic structural view of a motion system provided by Embodiment 2 of the present disclosure;
FIG. 4 is an exploded view of the motion system provided by Embodiment 2 of the present disclosure;
FIG. 5 is a schematic structural view of a motion system provided by Embodiment 3 of the present disclosure;
FIG. 6 is a schematic view of a partial structure of the motion system provided by Embodiment 3 of the present disclosure;
FIG. 7 is an exploded view of the motion system provided by Embodiment 3 of the present disclosure;
FIG. 8 is a schematic structural view of a motion system provided by Embodiment 4 of the present disclosure;
FIG. 9 is a schematic view of a partial structure of the motion system provided by Embodiment 4 of the present disclosure;
FIG. 10 is an exploded view of the motion system provided by Embodiment 4 of the present disclosure;
FIG. 11 is a schematic structural view of a motion system provided by Embodiment 5 of the present disclosure;
FIG. 12 is an exploded view of the motion system provided by Embodiment 5 of the present disclosure;
FIG. 13 and FIG. 14 are schematic diagrams of partial structures of an active system provided by Embodiment 6 of the present disclosure;
FIG. 15 is a sectional view of an active system provided by Embodiment 6 of the present disclosure;
FIG. 16 is a schematic structural view of the active system provided by Embodiment 6 of the present disclosure;
FIG. 17 is a schematic diagram of a partial structure of the active system provided by Embodiment 6 of the present disclosure;
FIG. 18 is a schematic diagram of a partial structure of a passive system provided by Embodiment 6 of the present disclosure;
FIG. 19 is a schematic structural view of a traditional 90° orthogonal cardan joint;
FIG. 20 is a schematic diagram of a field of view blocked by the traditional 90° orthogonal cardan joint;
FIG. 21 is a schematic structural view of a non-orthogonal cardan joint with an angle of α; and
FIG. 22 are schematic diagrams of the cardan joints in which a rotating component is replaced with an arm and a joint.

### DETAILED DESCRIPTION OF THE EMBODIMENTS

To make the objectives, technical solutions and advantages of the present disclosure more clearly, the following clearly and completely describes the technical solutions in the embodiments of the present disclosure with reference to the drawings in the embodiments of the present disclosure. Apparently, the described embodiments are merely a part rather than all of the embodiments of the present disclosure. All other embodiments obtained by a person of ordinary skill in the art based on the embodiments of the present disclosure without creative efforts shall fall within the scope of protection of the present disclosure.

The solutions of the embodiments of the present disclosure are described specifically below with reference to the drawings.

### Embodiment 1

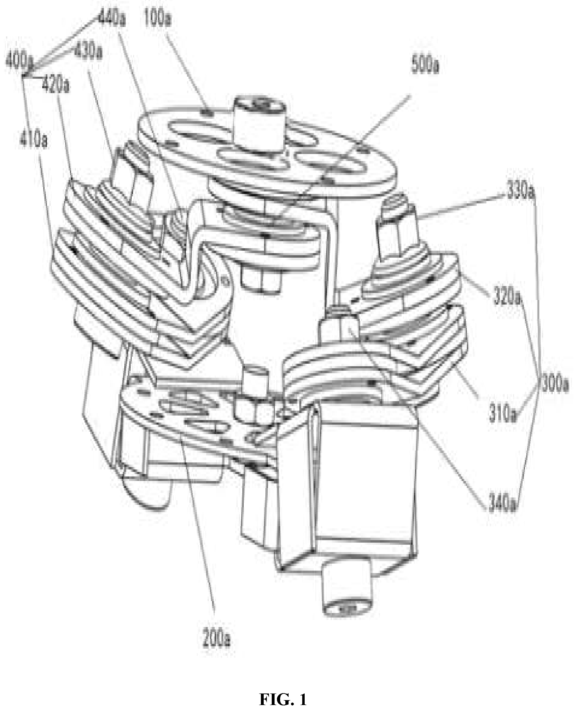

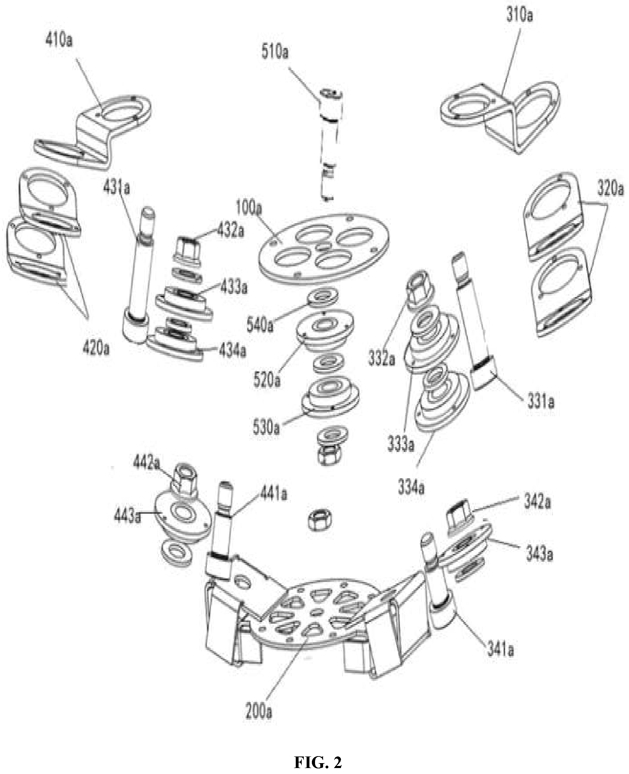

Referring to FIG. 1 and FIG. 2, a motion system provided by the embodiment of the present disclosure generally includes a first connecting disc 100a, a second connecting disc 200a, a first motion module 300a, a second motion module 400a, and a rotating assembly 500a. The first motion module 300a, the second motion module 400a and the rotating assembly 500a are all arranged between the first connecting disc 100a and the second connecting disc 200a. The first motion module 300a and the second motion module 400a are connected with one side of the first connecting disc 100a through the rotating assembly 500a, the other side of the first connecting disc 100a is configured for being connected with a supported object, and one side, away from the first connecting disc 100a, of the second connecting disc 200a is configured for being connected with a supporting device. It should be noted here that in the embodiments of the present disclosure, there are no specific limitations on the connection of the supported object and the supporting device. As an exemplary than non-restrictive explanation, the supported object may be a chair surface, and correspondingly, the supporting device may be a chair leg.

As a preferred embodiment, in the embodiment of the present disclosure, the first motion module 300a and the second motion module 400a are oppositely arranged. The first motion module 300a and the second motion module 400a have opposite motion directions (mainly referring to a rotation direction), and the first motion module 300a and the second motion module 400a have opposite and asymmetric motion ranges, such that the motion system can distribute a load from the supported object to two directions, thereby reducing the stress on the first motion module 300a and the stress on the second motion module 400a.

Further, referring to FIG. 1, the first motion module 300a includes first components 310a, a second component 320a, a first connecting mechanism 330a, and a second connecting mechanism 340a. Two opposite ends of the first component 310a are rotatably connected with the second connecting disc 200a through the second connecting mechanism 340a and one end of the second component 320a through the first connecting mechanism 330a, respectively. One end, away from the first component 310a, of the second component 320a is rotatably connected with the rotating assembly 500a. Correspondingly, the second motion module 400a includes third components 410a, a fourth component 420a, a third connecting mechanism 430a, and a fourth connecting mechanism 440a. Two opposite ends of the third component 410a are rotatably connected with the second connecting disc 200a through the fourth connecting mechanism 440a and one end of the fourth component 420a through the third connecting mechanism 430a, respectively. One end, away from the third component 410a, of the fourth component 420a is rotatably connected with the rotating assembly 500a.

Further, referring to FIG. 2, the rotating assembly 500a includes a first connecting shaft 510a, a first pillow block bearing 520a, and a second pillow block bearing 530a. Each of the first connecting disc 200a, the first pillow block bearing 520a and the second pillow block bearing 530a is provided with a through hole. The first connecting disc 200a, the first pillow block bearing 520a and the second pillow block bearing 530a are sleeved on the first connecting shaft 510a in sequence from top to bottom through the through holes formed thereon. One end, away from the first connecting disc 200a, of the first connecting shaft 510a is provided with external threads (not shown in figures), and the first connecting disc 200a, the first pillow block bearing 520a and the second pillow block bearing 530a are limited on the first connecting shaft 510a by a nut which is threaded to one end, provided with the external threads, of the first connecting shaft 510a.

Optionally, the rotating assembly 500a may also be provided with multiple spacers 540a according to actual demands. Preferably, one spacer 540a may be provided between the first connecting disc 100a and the first pillow block bearing 520a, one spacer 540a may be provided between the first pillow block bearing 520a and the second pillow block bearing 530a, and one spacer 540a may be provided between the second pillow block bearing 530a and the nut. A distance is established between the bearings by the spacer, thus making the bearings rotate. Meanwhile, the force area between the above-mentioned components can be increased, thus preventing the surfaces of the first connecting disc 200a, the first pillow block bearing 520a and the second pillow block bearing 530a from being damaged and deformed.

It may be understood that each of the first pillow block bearing 520a and the second pillow block bearing 530a includes an inner ring and an outer ring, and the inner ring and the outer ring can rotate relative to each other. The first pillow block bearing 520a and the second pillow block bearing 530a are sleeved on the first connecting shaft 510a through the inner rings thereof, and the inner rings are both fixedly connected with the first connecting shaft 510a, thus enabling the outer ring of the first pillow block bearing 520a and the outer ring of the second pillow block bearing 530a to rotate relative to the first connecting shaft 510a.

Further, referring to FIG. 2, the first connecting mechanism 330a includes a second connecting shaft 331a, a first nut 332a, a third pillow block bearing 333a, and a fourth pillow block bearing 334a. The third pillow block bearing 333a and the fourth pillow block bearing 334a are respectively sleeved on the second connecting shaft 331a, and the first nut 332a and the second connecting shaft 331a are in cooperative use to limit the third pillow block bearing 333a and the fourth pillow block bearing 334a on the second connecting shaft 331a.

Optionally, the second connecting shaft 331a includes a screw. Preferably, one spacer may be provided between the first nut 332a and the third pillow block bearing 333a, and one spacer may be provided between the third pillow block bearing 333a and the fourth pillow block bearing 334a.

It may be understood that each of the third pillow block bearing 333a and the fourth pillow block bearing 334a includes an inner ring, and an outer ring, and the inner ring and the outer ring can rotate relative to each other. The third pillow block bearing 333a and the fourth pillow block bearing 334a are respectively sleeved on the second connecting shaft 331a through the inner rings thereof, and the inner rings are both fixedly connected with the second connecting shaft 331a, thus making the outer ring of the third pillow block bearing 333a and the outer ring of the fourth pillow block bearing 334a rotate relative to the second connecting shaft 331a.

Further, referring to FIG. 2, the second connecting mechanism 340a includes a third connecting shaft 341a, a second nut 342a, and a fifth pillow block bearing 343a. The fifth pillow block bearing 343a is sleeved on the third connecting shaft 341a, and the second nut 342a and the third connecting shaft 341a are in cooperative use to limit the fifth pillow block bearing 343a on the third connecting shaft 341a.

Optionally, the third connecting shaft 341a includes a screw. Preferably, a spacer may be provided between a head of the third connecting shaft 341a and the fifth pillow block bearing 343a.

It may be understood that the fifth pillow block bearing 343a includes an inner ring and an outer ring, and the inner ring and the outer ring can rotate relative to each other. The fifth pillow block bearing 343a is sleeved on the third connecting shaft 341a through the inner ring thereof, and the inner ring is fixedly connected with the third connecting shaft 341a, thus making the outer ring of the fifth pillow block bearing 343a rotate relative to the third connecting shaft 341a.

Further, referring to FIG. 2, the third connecting mechanism 430a includes a fourth connecting shaft 431a, a third nut 432a, a sixth pillow block bearing 433a, and a seventh pillow block bearing 434a. The sixth pillow block bearing 433a and the seventh pillow block bearing 434a are sleeved on the fourth connecting shaft 431a, and the third nut 432a and the fourth connecting shaft 431a are in cooperative use to limit the sixth pillow block bearing 433a and the seventh pillow block bearing 434a on the fourth connecting shaft 431a.

Preferably, one spacer may be provided between the third nut 432a and the sixth pillow block bearing 433a, and one spacer may be provided between the sixth pillow block bearing 433a and the seventh pillow block bearing 434a, thus increasing the force area between the components above-mentioned and preventing the surfaces of the sixth pillow block bearing 433a and the seventh pillow block bearing 434a from being damaged and deformed.

It may be understood that each of the sixth pillow block bearing 433a and the seventh pillow block bearing 434a includes an inner ring and an outer ring, and the inner ring and the outer ring can rotate relative to each other. The sixth pillow block bearing 433a and the seventh pillow block bearing 434a are respectively sleeved on the fourth connecting shaft 431a through the inner rings thereof, and the inner rings are both fixedly connected with the fourth connecting shaft 431a, thus making the outer ring of the sixth pillow block bearing 433a and the outer ring of the seventh pillow block bearing 434a rotate relative to the fourth connecting shaft 431a.

Further, referring to FIG. 2, the fourth connecting mechanism 440a includes a fifth connecting shaft 441a, a fourth nut 442a, and an eighth pillow block bearing 443a. The eighth pillow block bearing 443a is sleeved on the fifth connecting shaft 441a, and the fourth nut 442a and the fifth connecting shaft 441a are in cooperative use to limit the eighth pillow block bearing 443a on the fifth connecting shaft 441a.

Optionally, the fifth connecting shaft 441a includes a screw. Preferably, one spacer may be provided between a head of the fifth connecting shaft 441a and the eighth pillow block bearing 443a, thus increasing the force area between the components above-mentioned, and preventing the surface of the eighth pillow block bearing 443a from being damaged and deformed.

It may be understood that the eighth pillow block bearing 443a includes an inner ring and an outer ring, and the inner ring and the outer ring can rotate relative to each other. The eighth pillow block bearing 443a is sleeved on the fifth connecting shaft 441a through the inner ring thereof, and the inner ring is fixedly connected with the fifth connecting shaft 441a, thus making the outer ring of the eighth pillow block bearing 443a rotate relative to the fifth connecting shaft 441a.

Further, referring to FIG. 2, both ends of each of the first component 310, the second component 320a, the third component 410 and the fourth component 420 are provided with through holes. Preferably, the number of the first components 310a is two, and the number of the third components 410 is two.

One end, adjacent to the second component 320a, of the first component 310a is sleeved on the second connecting shaft 331a through the through hole formed therein and is connected with the outer ring of the fourth pillow block bearing 334a. One end, away from the second component 320a, of the first component 310a is sleeved on the third connecting shaft 341a through the through hole formed therein and is connected with the outer ring of the fifth pillow block bearing 343a. One end, away from the first component 310a, of the second component 320a is sleeved on the first connecting shaft 510a through the through hole formed therein and is connected with the outer ring of the first pillow block bearing 520a. One end, adjacent to the first component 310a, of the second component 320a is sleeved on the second connecting shaft 331a through the through hole formed therein and is connected with the outer ring of the third pillow block bearing 333a. One end, adjacent to the fourth component 420a, of the third component 410a is sleeved on the fourth connecting shaft 431a through the through hole formed therein and is connected with the outer ring of the seventh pillow block bearing 434a. One end, away from the fourth component 420a, of the third component 410a is sleeved on the fifth connecting shaft 441a through the through hole formed therein and is connected with the outer ring of the eighth pillow block bearing 443a. One end, away from the third component 410a, of the fourth component 420a is sleeved on the first connecting shaft 510a through the through hole formed therein and is connected with the outer ring of the second pillow block bearing 520a. One end, adjacent to the third component 410a, of the fourth component 420a is sleeved on the fourth connecting shaft 431a through the through hole formed therein and is connected with the outer ring of the sixth pillow block bearing 433a. One end, adjacent to the first component 310a, of the second connecting disc 200a is sleeved on the third connecting shaft 341a, and one end, adjacent to the third component 410a, of the second connecting disc 200a is sleeved on the fifth connecting shaft 441a.

It may be understood that through above-mentioned connection modes, one end, adjacent to the second component 320a, of the first component 310a and one end, adjacent to the first component 310a, of the second component 320a can rotate relative to the second connecting shaft 331a through the fourth pillow block bearing 334a and the third pillow block bearing 333a, respectively. One end, away from the second component 320a, of the first component 310a can rotate relative to the third connecting shaft 341a through the fifth pillow block bearing 343a. One end, away from the first component 310a, of the second component 320a and one end, away from the third component 410a, of the fourth component 420a may rotate relative to the first connecting shaft 510a through the first pillow block bearing 530a and the second pillow block bearing 520a, respectively. One end, adjacent to the fourth component 420a, of the third component 410a and one end, adjacent to the third component 410a, of the fourth component 420a may rotate relative to the fourth connecting shaft 431a through the seventh pillow block bearing 434a and the sixth pillow block bearing 433a, respectively. One end, adjacent to the fourth component 420a, of the third component 410a may rotate relative to the fifth connecting shaft 441a through the eighth pillow block bearing 443a.

### Embodiment 2

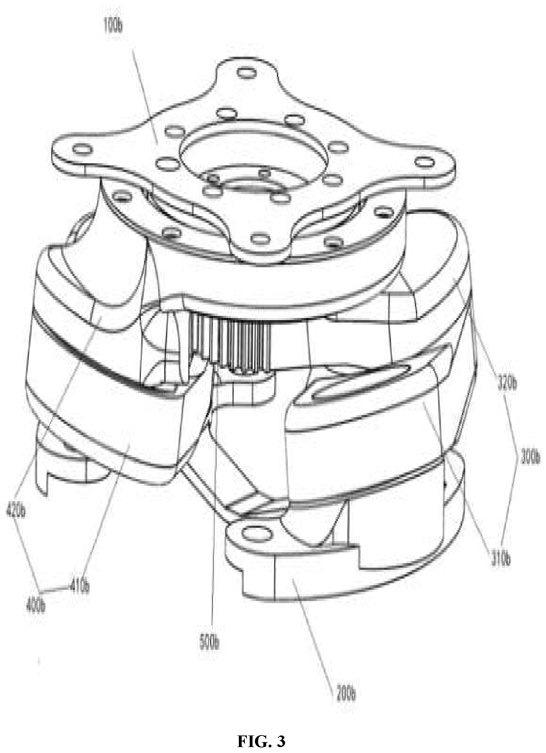

Referring to FIG. 3, a motion system provided by the embodiment of the present disclosure generally includes a first connecting disc 100b, a second connecting disc 200b, a first motion module 300b, a second motion module 400b, and a rotating assembly 500b. The first motion module 300b, the second motion module 400b and the rotating assembly 500b are arranged between the first connecting disc 100b and the second connecting disc 200b. The first motion module 300b and the second motion module 400b are connected with one side of the first connecting disc 100b through the rotating assembly 500b, the other side of the first connecting disc 100b is configured for being connected with a supported object, and one side, away from the first connecting disc 100b, of the second connecting disc 200b is configured for being connected with a supporting device. It should be noted here that in the embodiment of the present disclosure, there are no specific limitations on the connection of the supported object and the supporting device. As an exemplary than non-restrictive explanation, the supported object may be a chair surface, and correspondingly, the supporting device may be a chair leg.

As a preferred embodiment, in the embodiment of the present disclosure, the first motion module 300b and the second motion module 400b are oppositely arranged. The first motion module 300b and the second motion module 400b have opposite motion directions (mainly referring to a rotation direction), and the first motion module 300b and the second motion module 400b have opposite and asymmetric motion ranges, such that the motion system can distribute a load from the supported object to two directions, thereby reducing the stress on the first motion module 300b and the stress on the second motion module 400b.

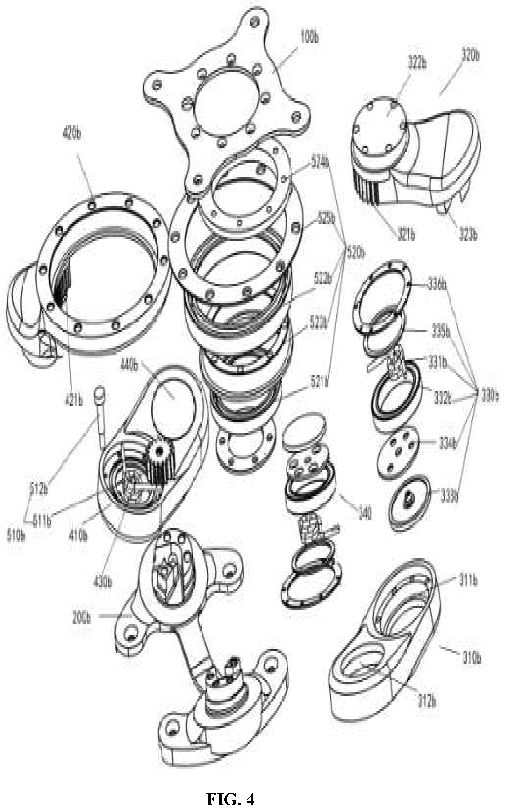

Further, referring to FIG. 3 and FIG. 4, the first motion module 300b includes a first component 310b, a second component 320b, a first connecting mechanism 330b, and a second connecting mechanism 340b. Two opposite ends of the first component 310b are rotatably connected with the second connecting disc 200b through the second connecting mechanism 340b and one end of the second component 320b through the first connecting mechanism 330b, respectively. One end, away from the first component 310b, of the second component 320b is rotatably connected with the rotating assembly 500b. Correspondingly, the second motion module 400b includes a third component 410b, a fourth component 420b, a third connecting mechanism 430b, and a fourth connecting mechanism 440b. Two opposite ends of the third component 410b are rotatably connected with the second connecting disc 200b through the fourth connecting mechanism 440b and one end of the fourth component 420b through the third connecting mechanism 430b, respectively. One end, away from the third component 410b, of the fourth component 420b is rotatably connected with the rotating assembly 500b.

The difference from Embodiment 1 is that, further referring to FIG. 4, in this embodiment of the present disclosure, the rotating assembly 500b includes a gear assembly 510b and a first bearing assembly 520b connected with each other. One end, away from the first component 310b, of the second component 320b is embedded inside the first bearing assembly 520b and is abutted against the gear assembly 510b; and one end, away from the third component 410b, of the fourth component 420b is sleeved outside the first bearing assembly 520b and is abutted against the gear assembly 510b.

As a preferred embodiment, in the embodiment of the present disclosure, the gear assembly 510b includes a gear 511b and a connector 512b. The first bearing assembly 520b includes a first bearing 521b, a second bearing 522b, a first annular element 523b, a second annular element 524b, and a third annular element 525b. It may be understood that each of the first bearing 521b and the second bearing 522b includes an inner ring and an outer ring, and the inner ring and the outer ring can rotate relative to each other. The second bearing 522b is sleeved on the outer ring of the first bearing 521b, the first annular element 523b is arranged between the first bearing 521b and the second bearing 522b, and is fixedly connected with the outer ring of the first bearing 521b and the inner ring of the second bearing 522b, respectively. One end, away from the first component 310b, of the second component 320b is embedded inside the inner ring of the first bearing 521b, and one end, away from the third component 410b, of the fourth component 420b is sleeved outside the outer ring of the second bearing 522b, such that one end, away from the first component 310b, of the second component 320b and one end, away from the third component 410b, of the fourth component 420b may rotate in opposite directions through the first bearing 521b and the second bearing 522b. The gear 511b is connected with the first annular element 523b through the connector 512b and the second annular element 524b, and thus the gear 511b is connected with both the outer ring of the first bearing 521b and the inner ring of the second bearing 522b. The first connecting disc 100b is connected with the first annular element 523b through the third annular element 525b, and thus the first connecting disc 100b is connected with both the outer ring of the first bearing 521b and the inner ring of the second bearing 522b.

Further, referring to FIG. 4, during specific implementation, one end of the second component 320b and one end of the fourth component 420b are abutted against the gear 511b. One end, abutting against the gear 511b, of the second component 320b is provided with an outer gear ring 321b in fitting with the gear 511b, and one end, abutting against the gear 511b, of the fourth component 420b is provided with an inner gear ring 421b in fitting with the gear 511, thus achieving the meshing of the outer gear ring 321b, the inner gear ring 421b and the gear 511b.

Further, referring to FIG. 4, the first connecting mechanism 330b includes a second bearing assembly, and a first elastic element 331b. The second connecting mechanism includes a third bearing assembly, and a second elastic element. The third connecting mechanism includes a fourth bearing assembly, and a third elastic element. The fourth connecting mechanism includes a fifth bearing assembly, and a fourth elastic element. One end, adjacent to the first component, of the second component is embedded inside the second bearing assembly, one end, adjacent to the second component, of the first component is sleeved outside the second bearing assembly, and the first elastic element is arranged between the second component and the second bearing assembly. One end, away from the second component, of the first component is sleeved outside the third bearing assembly, one end, adjacent to the first component, of the second connecting disc is embedded inside the third bearing assembly, and the second elastic element is arranged between the second connecting disc and the third bearing assembly. One end, adjacent to the third component, of the fourth component is embedded inside the fourth bearing assembly, one end, adjacent to the fourth component, of the third component is sleeved outside the fourth bearing assembly, and the third elastic element is arranged between the fourth component and the third bearing assembly. One end, away from the fourth component, of the third component is sleeved outside the fifth bearing assembly, one end, adjacent to the third component, of the second connecting disc is embedded inside the fifth bearing assembly, and the fourth elastic element is arranged between the second connecting disc and the fifth bearing assembly.

The first connecting mechanism is taken as an example for illustration, during implementation, the second bearing assembly includes a third bearing 332b, a mounting base 333b, and optionally includes a mounting spacer 334b, a first washer 335b, and a second washer 336b. The second connecting mechanism 340b includes a third bearing assembly and a second elastic element. The third bearing assembly has the same structure and components as the second bearing assembly, and thus will not be repeated one by one here. Two opposite ends of the first component 310b are respectively provided with a first mounting hole 311b and a second mounting hole 312b, and two opposite ends of the second component 320b are respectively provided with a first protrusion 322b and a second protrusion 323b. The second bearing assembly is arranged in the first mounting hole 311b, and the second connecting mechanism 340b is arranged in the second mounting hole 312b. Specifically, the second bearing assembly is taken as an example for illustration. The mounting base 333b is arranged at the bottom of the first mounting hole 311b. The mounting spacer 334b, the third bearing 332b, the first washer 335b and the second washer 336b are arranged on the mounting base 333b in sequence. The first elastic element 331b is arranged in the inner ring of the third bearing 332b.

During specific implementation, one end, adjacent to the first component 310b, of the second component 320b is embedded inside the inner ring of the third bearing 332b, one end, adjacent to the second component 320b, of the first component 310b is sleeved outside the outer ring of the third bearing 332b, and thus one end, adjacent to the first component 310b, of the second component 320b and one end, adjacent to the second component 320b, of the first component 310b can rotate relative to each other through the third bearing 332b. One end, away from the second component 320b, of the first component 310b is sleeved outside the third bearing assembly, and one end, adjacent to the first component 310b, of the second connecting disc 200b is embedded inside the third bearing assembly, and thus the first component 310b and the second connecting disc 200b can rotate relative to each other through the third bearing assembly.

As an alternative embodiment, in the embodiment of the present disclosure, the first elastic element 331b and the second elastic element are springs. It may be understood that when the first elastic element 331b and the second elastic element are springs, the mounting base 333b is provided with a boss on which the spring can be sleeved. The first elastic element 331b is arranged to provide necessary resistance, so as to keep the center of motion of the motion system.

As another alternative embodiment, in the embodiment of the present disclosure, the first elastic element 331b and the second elastic element are rubber blocks. It may be understood that when the first elastic element 331b and the second elastic element are rubber blocks, necessary resistance may also be provided to keep the center of motion of the motion system.

As a preferred embodiment, in the embodiment of the present disclosure, the third connecting mechanism and the fourth connecting mechanism of the second motion module have the same structures and components as the first connecting mechanism and the second connecting mechanism of the first motion module, and the third component has the completely same structure as the first component. Related contents can refer to the above and will not be repeated one by one here.

It may be understood that one end, adjacent to the third component 410b, of the fourth component 420b is embedded inside the fourth bearing assembly. One end, adjacent to the fourth component 420b, of the third component 410b is sleeved outside the fourth bearing assembly, and thus one end, adjacent to the third component 410b, of the fourth component 420b and one end, adjacent to the fourth component 420b, of the third component 410b can rotate relative to each other through the fourth bearing assembly. One end, away from the fourth component 420b, of the third component 410b is sleeved outside the fifth bearing assembly, one end, adjacent to the third component 410b, of the second connecting disc 200b is embedded inside the fifth bearing assembly, and thus the third component 410b and the second connecting disc 200b can rotate relative to each other through the fifth bearing assembly.

### Embodiment 3

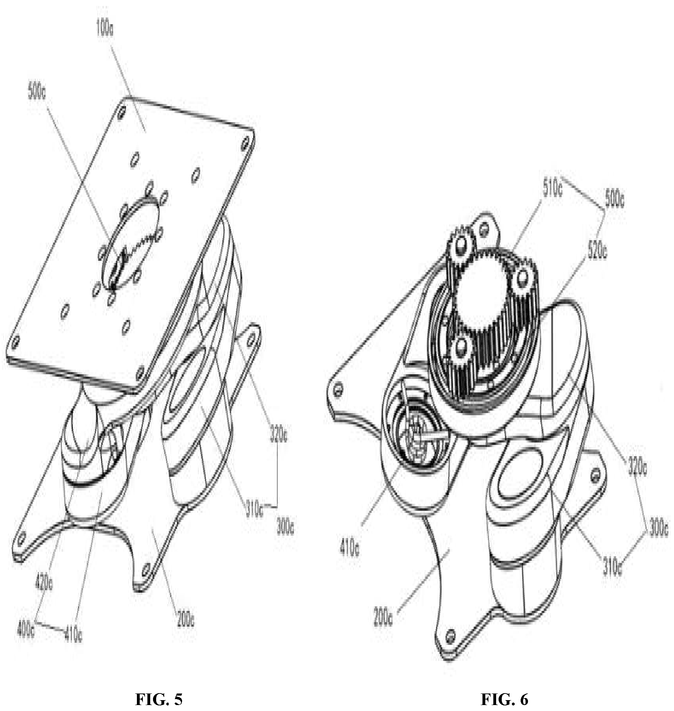

Referring to FIG. 5, a motion system provided by the embodiment of the present disclosure generally includes a first connecting disc 100c, a second connecting disc 200c, a first motion module 300c, a second motion module 400c, and a rotating assembly 500c. The first motion module 300c, the second motion module 400c and the rotating assembly 500c are arranged between the first connecting disc 100c and the second connecting disc 200c. The first motion module 300c and the second motion module 400c are connected with one side of the first connecting disc 100c through the rotating assembly 500c, the other side of the first connecting disc 100c is configured for being connected with a supported object, and one side, away from the first connecting disc 100c, of the second connecting disc 200c is configured for being connected with a supporting device. It should be noted here that in the embodiment of the present disclosure, there are no specific limitations on the connection of the supported object and the supporting device. As an exemplary than non-restrictive explanation, the supported object may be a chair surface, and correspondingly, the supporting device may be a chair leg.

As a preferred embodiment, in the embodiment of the present disclosure, the first motion module 300c and the second motion module 400c are oppositely arranged. The first motion module 300c and the second motion module 400c have opposite motion directions (mainly referring to a rotation direction), and the first motion module 300c and the second motion module 400c have opposite and asymmetric motion ranges, such that the motion system can distribute a load from the supported object to two directions, thereby reducing the stress on the first motion module 300c and the stress on the second motion module 400c.

Further, referring to FIG. 5 and FIG. 6, the first motion module 300c includes a first component 310c, a second component 320c, a first connecting mechanism 330c, and a second connecting mechanism 340c. Two opposite ends of the first component 310c are rotatably connected with the second connecting disc 200c through the second connecting mechanism 340c and one end of the second component 320c through the first connecting mechanism 330c, respectively. One end, away from the first component 310c, of the second component 320c is rotatably connected with the rotating assembly 500c. Correspondingly, the second motion module 400c includes a third component 410c, a fourth component 420c, a third connecting mechanism 430c, and a fourth connecting mechanism 440c. Two opposite ends of the third component 410c are rotatably connected with the second connecting disc 200c through the fourth connecting mechanism 440c and one end of the fourth component 420c through the third connecting mechanism 430c, respectively. One end, away from the third component 410c, of the fourth component 420c is rotatably connected with the rotating assembly 500c.

The difference from Embodiment 2 is that an outer gear ring is no longer provided at one end, away from the first component 310c, of the second component 320c, and an inner gear ring is no longer provided at one end, away from the third component 410c, of the fourth component 420c.

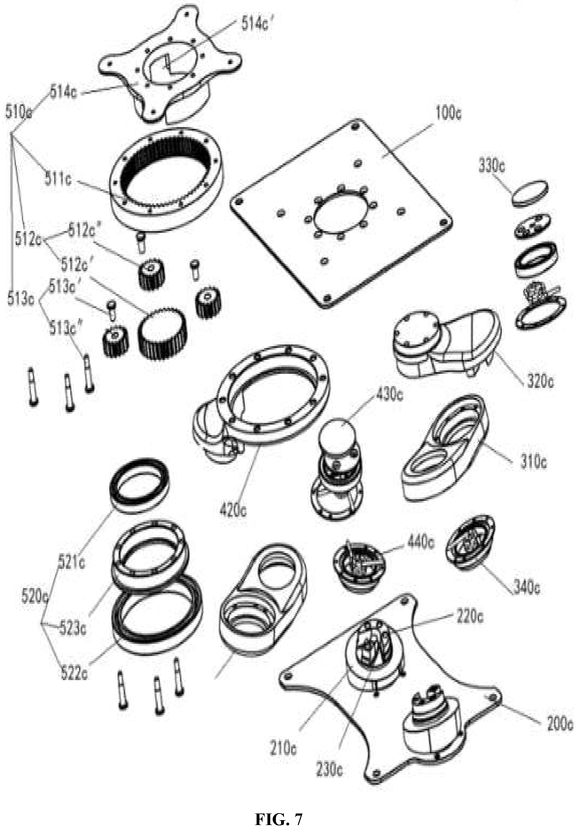

Further, referring to FIG. 6 and FIG. 7, in the specific embodiment of the present disclosure, the rotating assembly 500c includes a gear assembly 510c and a first bearing assembly 520c connected with each other. One end, away from the first component 310c, of the second component 320c is embedded inside the first bearing assembly 520c, and one end, away from the third component 410c, of the fourth component 420c is sleeved outside the first bearing assembly 520c.

As a preferred embodiment, in the embodiment of the present disclosure, the gear assembly 510c includes an inner gear ring 511c, a gear train 512c, a connector 513c, and a mounting sleeve 514c. The inner gear ring 511c is meshed with the gear train 512c, the gear train 512c is connected with the first bearing assembly 520c through the connector 513c, and the mounting sleeve 514c is sleeved outside the gear train 512c. The first connecting disc 100c is connected with the mounting sleeve 514c. The first bearing assembly 520c includes a first bearing 521c, a second bearing 522c, and an annular element 523c. It may be understood that each of the first bearing 521c and the second bearing 522c includes an inner ring and an outer ring, and the inner ring and the outer ring can rotate relative to each other. The second bearing 522c is sleeved on the outer ring of the first bearing 521c, the annular element 523c is arranged between the first bearing 521c and the second bearing 522c, and is fixedly connected with the outer ring of the first bearing 521c and the inner ring of the second bearing 522c. One end, away from the first component 310c, of the second component 320c is embedded inside the inner ring of the first bearing 521c, one end, away from the third component 410c, of the fourth component 420c is sleeved outside the outer ring of the second bearing 522c, and thus one end, away from the first component 310c, of the second component 320c, and one end, away from the third component 410c, of the fourth component 420c can rotate in opposite directions through the first bearing 521c and the second bearing 522c. The gear train 512c is connected with the annular element 523c through the connector 513c, and thus the gear train 512c is connected with both the outer ring of the first bearing 521c and the inner ring of the second bearing 522c.

Further, referring to FIG. 7, the gear train 512c includes a sun gear 512c' and at least one planetary gear 512c" meshed with the sun gear. Illustratively, the number of the planetary gears 512c" is three. A side wall of the mounting sleeve 514c is provided with an opening 514c' corresponding to the planetary gear 512c", so as to facilitate the meshing between the planetary gear 512c" and the inner gear ring 511c. Those skilled in the art may understand that one or more planetary gears can achieve the same function as this exemplary embodiment.

Preferably, the connector 513c includes a first connector 513c' and a second connector 513c" in fitting with each other. A connecting hole (not shown in figures) is provided at one end of the first connector 513c', the end with the connecting hole of the first connector 513c' is embedded into the planetary gear 512c", the second connector 513c" is embedded into the annular element 523c, and the connecting hole of the first connector 513c' is sleeved on one end of the second connector 513", thus achieving connection.

Further, referring to FIG. 7, in this embodiment of the present disclosure, the second connecting disc 200c is provided with two connecting seats, and each connecting seat includes a base 210c connected with the second connecting disc 200c, and a protrusion 220c formed by extending in a direction, away from the second connecting disc 200c, of the base 210c, and the protrusion 220c is provided with a mounting groove 230c. One end, away from the fourth component 420, of the third component 410 and one end, away from the second component 320, of the first component 310 are sleeved on the protrusion 220c, and the first elastic element and the second elastic element are arranged in the mounting groove 230c. Those skilled in the art may understand that the protrusion 220c may also be mounted and connected by other existing conventional methods or easily conceivable deformation methods.

As a preferred embodiment, in the embodiment of the present disclosure, the first connecting mechanism, the second connecting mechanism, the third connecting mechanism and the fourth connecting mechanism have the same structures and components as the first connecting mechanism, the second connecting mechanism, the third connecting mechanism and the fourth connecting mechanism in Embodiment 2, and the first component and the third component have the completely same structures as the first component and the third component in Embodiment 2. Related contents can refer to the above and will not be repeated one by one here.

### Embodiment 4

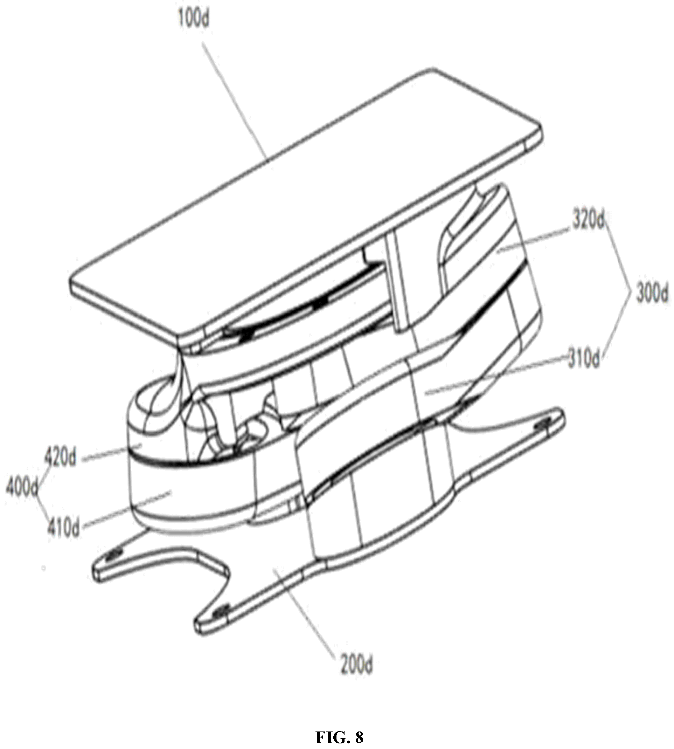

Referring to FIG. 8, a motion system provided by the embodiment of the present disclosure generally includes a first connecting disc 100d, a second connecting disc 200d, a first motion module 300d, a second motion module 400d, and a rotating assembly 500d. The first motion module 300d, the second motion module 400d and the rotating assembly 500d are arranged between the first connecting disc 100d and the second connecting disc 200d. The first motion module 300d and the second motion module 400d are connected with one side of the first connecting disc 100d through the rotating assembly 500d, the other side of the first connecting disc 100d is configured for being connected with a supported object, and one side, away from the first connecting disc 100d, of the second connecting disc 200d is configured for being connected with a supporting device. It should be noted here that in the embodiment of the present disclosure, there are no specific limitations on the connection of the supported object and the supporting device. As an exemplary than non-restrictive explanation, the supported object may be a chair surface, and correspondingly, the supporting device may be a chair leg.

As a preferred embodiment, in the embodiment of the present disclosure, the first motion module 300d and the second motion module 400d are oppositely arranged. The first motion module 300d and the second motion module 400d have opposite motion directions (mainly referring to a rotation direction), and the first motion module 300d and the second motion module 400d have opposite and asymmetric motion ranges, such that the motion system can distribute a load from the supported object to two directions, thereby reducing the stress on the first motion module 300d and the stress on the second motion module 400d.

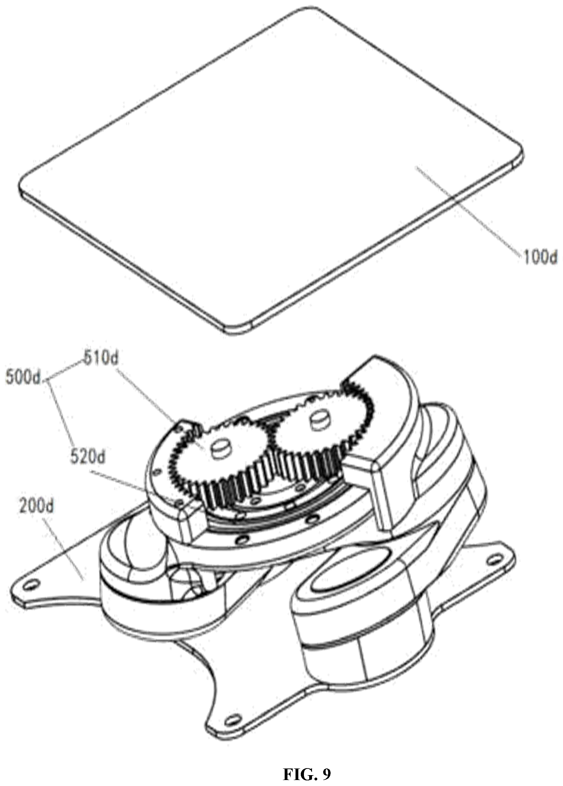

Further, referring to FIG. 8 and FIG. 9, the first motion module 300d includes a first component 310d, a second component 320d, a first connecting mechanism 330d, and a second connecting mechanism 340d. Two opposite ends of the first component 310d are rotatably connected with the second connecting disc 200d through the second connecting mechanism 340d and one end of the second component 320d through the first connecting mechanism 330d, respectively. One end, away from the first component 310d, of the second component 320d is rotatably connected with the rotating assembly 500d. Correspondingly, the second motion module 400d includes a third component 410d, a fourth component 420d, a third connecting mechanism 430d, and a fourth connecting mechanism 440d. Two opposite ends of the third component 410d are rotatably connected with the second connecting disc 200d through the fourth connecting mechanism 440d and one end of the fourth component 420d through the third connecting mechanism 430d, respectively. One end, away from the third component 410d, of the fourth component 420d is rotatably connected with the rotating assembly 500d.

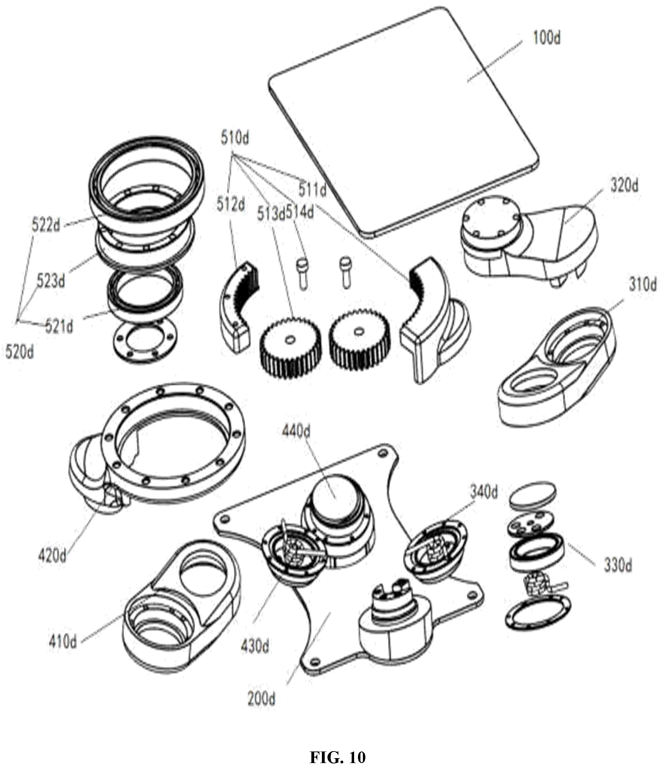

The difference from Embodiment 3 is that, further referring to FIG. 9 and FIG. 10, in this embodiment of the present disclosure, the rotating assembly 500d includes a gear assembly 510d and a first bearing assembly 520d connected with each other. One end, away from the first component 310d, of the second component 320d is embedded inside the first bearing assembly 520d, and one end, away from the third component 410d, of the fourth component 420d is sleeved outside the first bearing assembly 520d.

As a preferred embodiment, in this embodiment of the present disclosure, the gear assembly 510d includes a first inner gear ring 511d, a second inner gear ring 512d, a gear train 513d, and a connector 514d. The first inner gear ring 511d and the second inner gear ring 512d are both meshed with the gear train 513d, and the gear train 513d is connected with the first bearing assembly 520d through the connector 514d. The first bearing assembly 520d includes a first bearing 521d, a second bearing 522d, and an annular element 523d. The first bearing assembly 520d has the same structure as the first bearing assembly 520c in Embodiment 3. Related contents can refer to the above and will not be repeated one by one here. One end, away from the first component 310d, of the second component 320d is embedded in the inner ring of the first bearing 521d, one end, away from the third component 410d, of the fourth component 420d is sleeved outside the outer ring of the second bearing 522d, and thus one end, away from the first component 310d, of the second component 320d and one end, away from the third component 410d, of the fourth component 420d can rotate in opposite directions through the first bearing 521d and the second bearing 522d. The gear train 513d is connected with the annular element 523d through the connector 514d, and thus the gear train 513d is connected with both the outer ring of the first bearing 521d and the inner ring of the second bearing 522d.

Further, referring to FIG. 10, the gear train 513d includes two gears meshed with each other, and the two gears are respectively meshed with the first inner gear ring 511d and the second inner gear ring 512d. The first inner gear ring 511d is fixedly connected with the second component 320d, and the second inner gear ring 512d is fixedly connected with the fourth component 420d.

As a preferred embodiment, in this embodiment of the present disclosure, the second connecting disc, the first connecting mechanism, the second connecting mechanism, the third connecting mechanism and the fourth connecting mechanism have the same structures and components as those in Embodiment 2, and the first component and the third component have the completely same structures as those in Embodiment 2. The related contents can refer to the above and thus will not be repeated one by one here.

### Embodiment 5

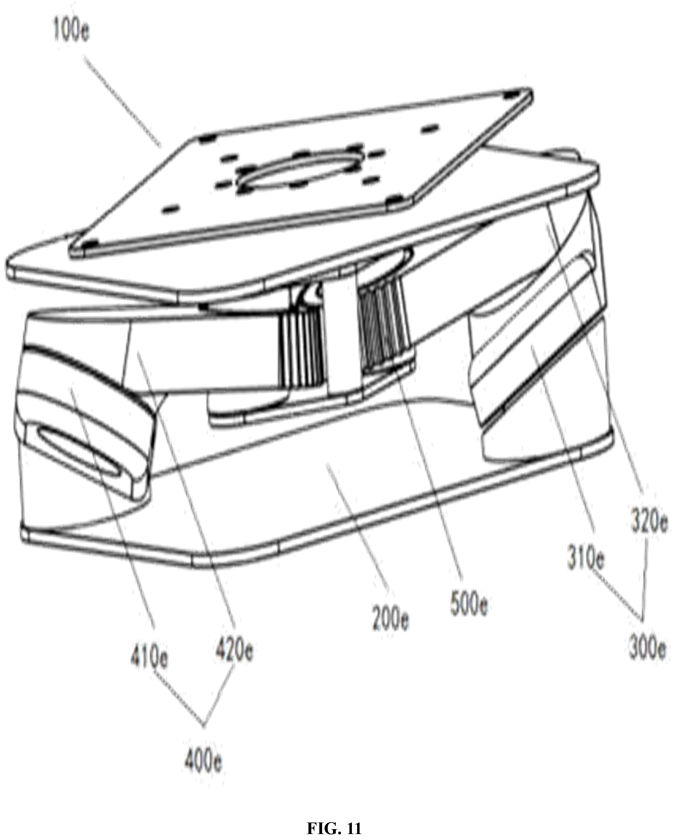

Referring to FIG. 11, a motion system provided by the embodiment of the present disclosure generally includes a first connecting disc 100e, a second connecting disc 200e, a first motion module 300e, a second motion module 400e, and a rotating assembly 500e. The first motion module 300e, the second motion module 400e and the rotating assembly 500e are arranged between the first connecting disc 100e and the second connecting disc 200e. The first motion module 300e and the second motion module 400e are connected with one side of the first connecting disc 100e through the rotating assembly 500e, the other side of the first connecting disc 100e is configured for being connected with a supported object, and one side, away from the first connecting disc 100e, of the second connecting disc 200e is configured for being connected with a supporting device. It should be noted here that in the embodiment of the present disclosure, there are no specific limitations on the connection of the supported object and the supporting device. As an exemplary than non-restrictive explanation, the supported object may be a chair surface, and correspondingly, the supporting device may be a chair leg.

As a preferred embodiment, in the embodiment of the present disclosure, the first motion module 300e and the second motion module 400e are oppositely arranged. The first motion module 300e and the second motion module 400e have opposite motion directions (mainly referring to a rotation direction), and the first motion module 300e and the second motion module 400e have opposite and asymmetric motion ranges, such that the motion system can distribute a load from the supported object to two directions, thereby reducing the stress on the first motion module 300e and the stress on the second motion module 400e.

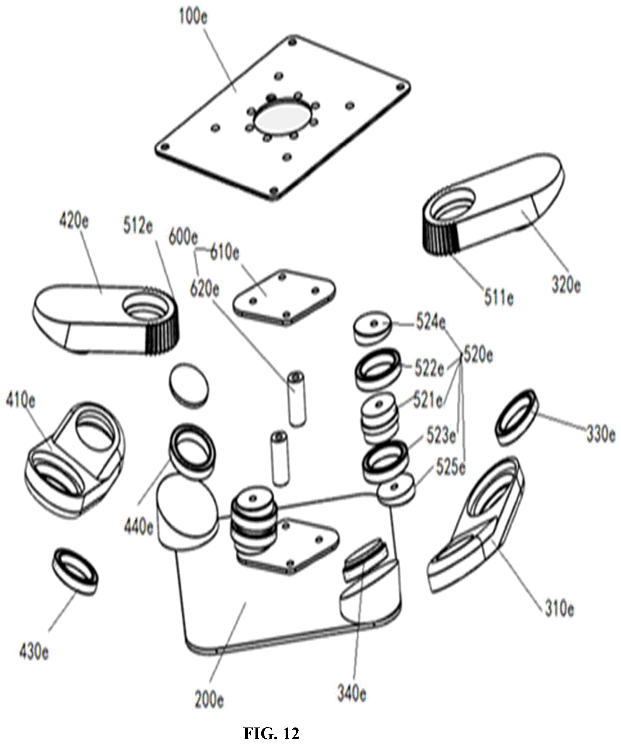

Further, referring to FIG. 11 and FIG. 12, the first motion module 300e includes a first component 310e, a second component 320e, a first connecting mechanism 330e, and a second connecting mechanism 340e. Two opposite ends of the first component 310e are rotatably connected with the second connecting disc 200e through the second connecting mechanism 340e and one end of the second component 320e through the first connecting mechanism 330e, respectively. One end, away from the first component 310e, of the second component 320e is rotatably connected with the rotating assembly 500e. Correspondingly, the second motion module 400e includes a third component 410e, a fourth component 420e, a third connecting mechanism 430e, and a fourth connecting mechanism 440e. Two opposite ends of the third component 410e are rotatably connected with the second connecting disc 200e through the fourth connecting mechanism 440e and one end of the fourth component 420e through the third connecting mechanism 430e, respectively. One end, away from the third component 410e, of the fourth component 420e is rotatably connected with the rotating assembly 500e.

The difference from Embodiment 3 is that, further referring to FIG. 11 and FIG. 12, in this embodiment of the present disclosure, the rotating assembly 500e includes a gear assembly, and two first bearing assemblies 520e. One end, away from the first component 310e, of the second component 320 is sleeved outside one of the first bearing assemblies 520e, and one end, away from the third component 410e, of the fourth component 420e is sleeved outside another first bearing assembly 520e. One end, away from the first component 310e, of the second component 320e is abutted against one end, away from the third component 410e, of the fourth component 420e through the gear assembly.

As a preferred embodiment, in the embodiment of the present disclosure, the gear assembly includes a first outer gear ring 511e, and a second outer gear ring 512e. The first outer gear ring 511e is meshed with the second outer gear ring 512e. The first outer gear ring 511e is arranged at one end, away from the first component 310e, of the second component 320e, and the second outer gear ring 512e is arranged at one end, away from the third component 410e, of the fourth component 420e. The arrangement of the first outer gear ring 511e and the second outer gear ring 512e may further limit the motion range of the first motion module and the second motion module.

Further, referring to FIG. 12, each first bearing assembly 520e includes a connecting pillar 521e, a first bearing 522e, a second bearing 523e, a first cushion block 524e, and a second cushion block 525e. The first bearing 522e and the second bearing 523e are sleeved on the connecting pillar 521e, the first cushion block 524e and the second cushion block 525e are in fitting with each other to limit the first bearing 522e and the second bearing 523e on the connecting pillar 521e. It may be understood that each of the first bearing 522e and the second bearing 523e includes an inner ring and an outer ring, and the inner ring and the outer ring can rotate relative to each other. The first bearing 522e and the second bearing 523e are sleeved on the connecting pillar 521e through the inner rings thereof, and the inner rings are both fixedly connected with the connecting pillar 521e, thus making the outer ring of the first bearing 522e and the outer ring of the second bearing 523e rotate relative to the connecting pillar 521e. Further, the second component and the fourth component sleeved outside the first bearing assembly can rotate relative to the connecting pillar 521e.

Further, referring to FIG. 12, in this embodiment, the motion system further includes a mounting component 600e. The mounting component 600e includes two supporting pillars 610e, and two stop plates 620e. The two first bearing assemblies 520e and the two supporting pillars 610e are fixed between the two stop plates 620e, the two first bearing assemblies 520e are located at two opposite corners of the stop plate 620e, and the two supporting pillars 610e are located at another two opposite corners of the stop plates 620e. The sides, away from the first bearing assemblies 520e, of the two stop plates are connected with the first connecting disc 100e and the second connecting disc 200e, respectively.

As a preferred embodiment, in this embodiment of the present disclosure, each of the first connecting mechanism 330e, the second connecting mechanism 340e, the third connecting mechanism 430e and the fourth connecting mechanism 440e includes a bearing, and the connecting mode between each connecting mechanism and each component may refer to the related content above-mentioned, and thus will not be repeated one by one here.

### Embodiment 6

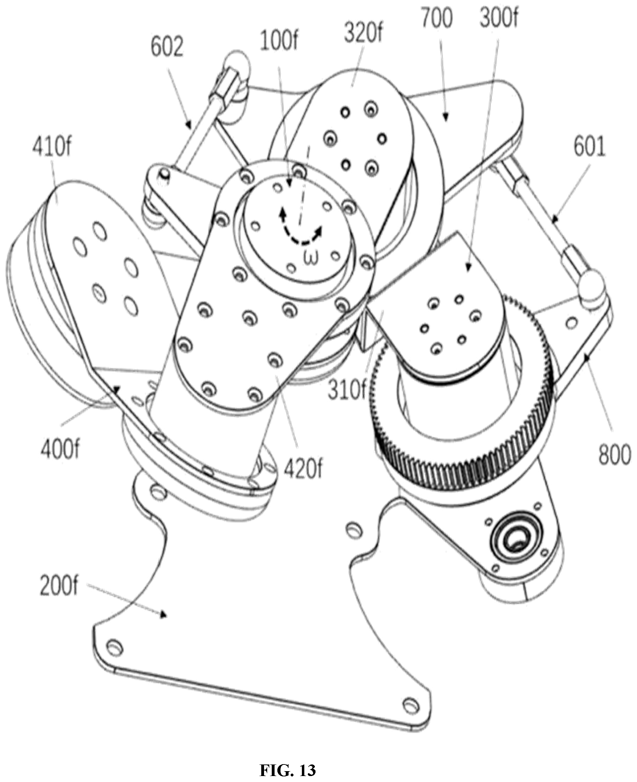

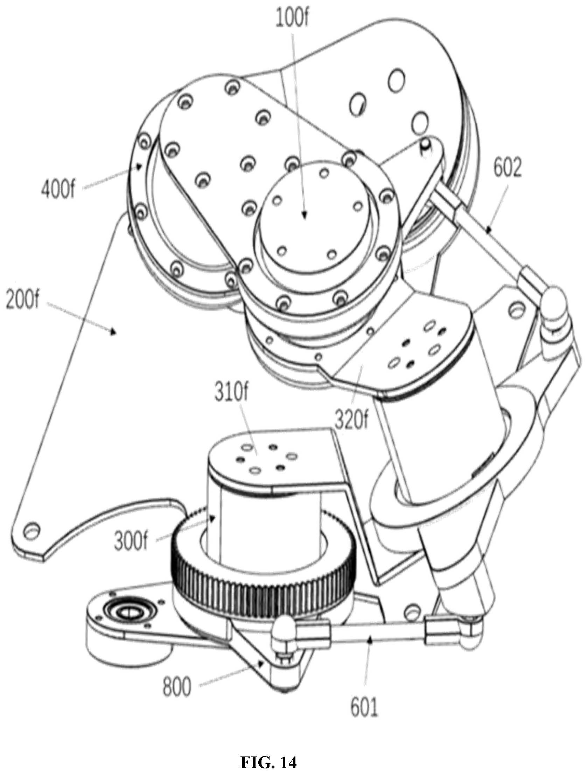

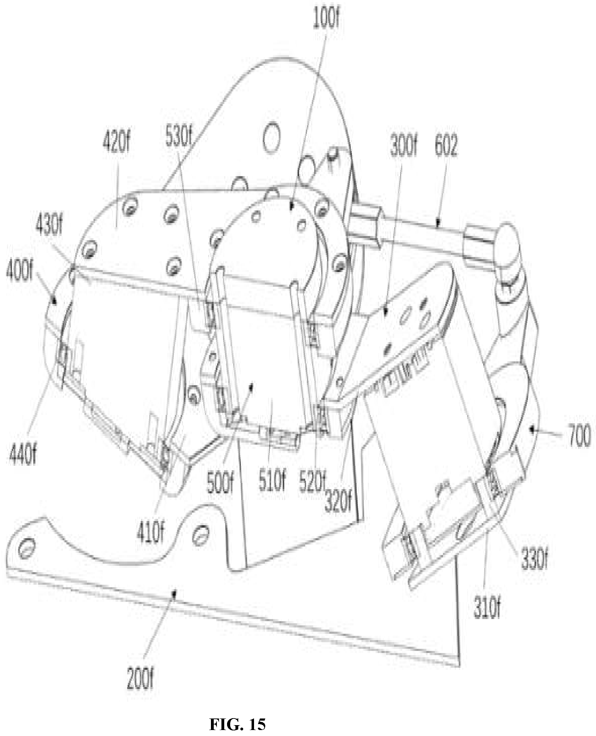

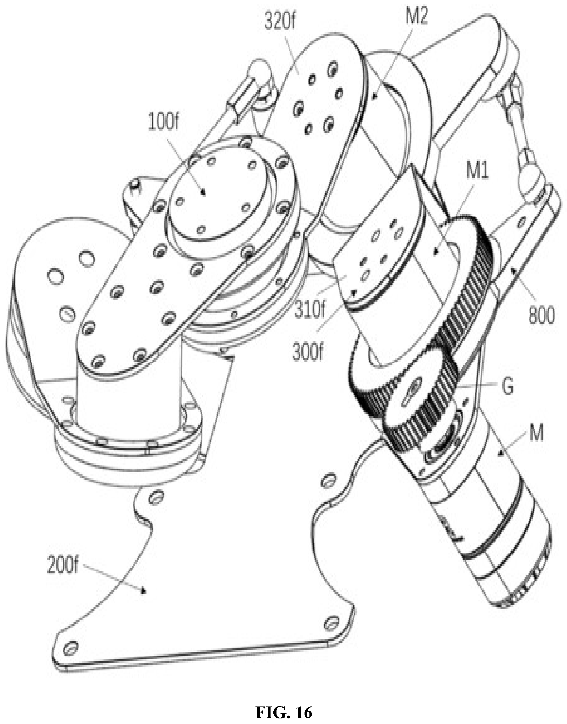

Embodiment 6 of the present disclosure is introduced with reference to FIG. 13 to FIG. 18. Embodiment 6 is a variation of Embodiment 1 or Embodiment 2. Components with the same or similar structure or function as those in Embodiment 1 or Embodiment 2 are given the same or similar reference numerals, and detailed descriptions of these components are omitted.

The main difference between Embodiment 6 and Embodiment 1 is that the rotation of a first connecting disc 100f around its own axis in ω direction is limited.

The main difference between Embodiment 6 and Embodiment 2 is that the limitation of the first connecting disc 100f in the ω direction is achieved by means of connecting rod assemblies, instead of the gear assembly 510b in Embodiment 2.

It should be noted that the limitation of the rotation of the first connecting disc 100f in the ω direction here does not necessarily mean that the first connecting disc 100f cannot rotate in the ω direction. In a passive system (i.e., a system without a driving source), the first connecting disc 100f may generally be set so as not to rotate in the ω direction. In an active system (i.e., a system with a driving source), the limitation of the rotation of the first connecting disc 100f in the ω direction can be manifested that the first connecting disc 100f rotates in the ω direction in a controlled manner. For example, the rotation of the first connecting disc 100f in the ω direction can be controlled by controlling of either a first motion module 300f or a second motion module 400f to rotate.

The active system is shown in FIG. 13 to FIG. 17. The system shown in Embodiment 1 is used as a basic system, on the basis of the basic system, the active system further includes a deflection motor M, a driving gear G, a driving disc 800, a rotary transmission disc 700, a first connecting rod assembly 601, and a second connecting rod assembly 602.

The rotary transmission disc 700 and a first connecting member 330f are coaxially provided, and the rotary transmission disc 700 can rotate relative to the first connecting member 330f and a second component 320f. For example, the rotary transmission disc 700 is sleeved on the periphery of the first connecting member 330f, a bearing is provided between the rotary transmission disc 700 and the first connecting member 330f, and thus the rotation of the rotary transmission disc 700 cannot drive the first connecting member 330f and the second component 320f to rotate.

The driving disc 800 and a second connecting member 340f are coaxially provided, and the driving disc 800 can rotate relative to the first member 310f and the second connecting member 340f. For example, the driving disc 800 is sleeved on the periphery of the second connecting member 340f, a bearing is provided between the driving disc 800 and the second connecting member 340f, and thus the rotation of the driving disc 800 cannot drive the second connecting member 340f and the first member 310f to rotate.

One end of each of the first connecting rod assembly 601 and the second connecting rod assembly 602 is connected with the rotary transmission disc 700, and the first connecting rod 601, the second connecting rod 602 and the rotary transmission disc 700 form a synchronous rotation device.

The other end of the first connecting rod assembly 601 is connected with the driving disc 800, and the other end of the second connecting rod assembly 602 is connected with the rotating assembly 500f. Both ends of each of the first connecting rod assembly 601 and the second connecting rod assembly 602 are ball joints. The first connecting rod assembly 601 and the second connecting rod assembly 602 have fixed lengths. The rotation of the driving disc 800 around its own axis and the rotation of the first connecting disc 100f around its own axis can be synchronized through a connecting chain from the driving disc 800, the first connecting rod assembly 601, the rotary transmission disc 700, the second connecting rod assembly 602 and the rotating assembly 500f to the first connecting disc 100f.

In this embodiment, the periphery of the driving disc 800 is provided with teeth, which are meshed with the driving gear G. The driving gear G is connected with the deflection motor M (without rotating relatively) in a torque-proof manner, the rotation of the deflection motor M is transmitted to the first connecting disc 100f, and thus the first connecting disc 100f is controlled to rotate.

It should be noted that as the system is the active system, for example, a first driving motor M1 configured for driving the first component 310f to rotate and a second driving motor M2 configured for driving the second component 320f to rotate may be provided to actively control the other two rotational freedoms of the first connecting disc 100f, that is, tilt and roll.

It should be understood that in order to control the rotational freedom of the first connecting disc 100f around its own axis, the synchronous rotation device including the first connecting rod 601, the second connecting rod 602 and the rotary transmission disc 700 only needs to be connected with either the first motion module 300f or the second motion module 400f. In order to control the tilt and rolling freedom of the first connecting disc 100f, the first driving motor M1 and the second driving motor M2 only need to be connected with either the first motion module 300f or the second motion module 400f. Although in this embodiment, the synchronous rotation device, the first driving motor M1 and the second driving motor M2 are all connected with the first motion module 300f, this is not necessary. For example, in other embodiments, the synchronous rotation device may be connected with one of the first motion module 300f and the second motion module 400f, the first driving motor M1 and the second driving motor M2 may be connected with the other of the first motion module 300f and the second motion module 400f.

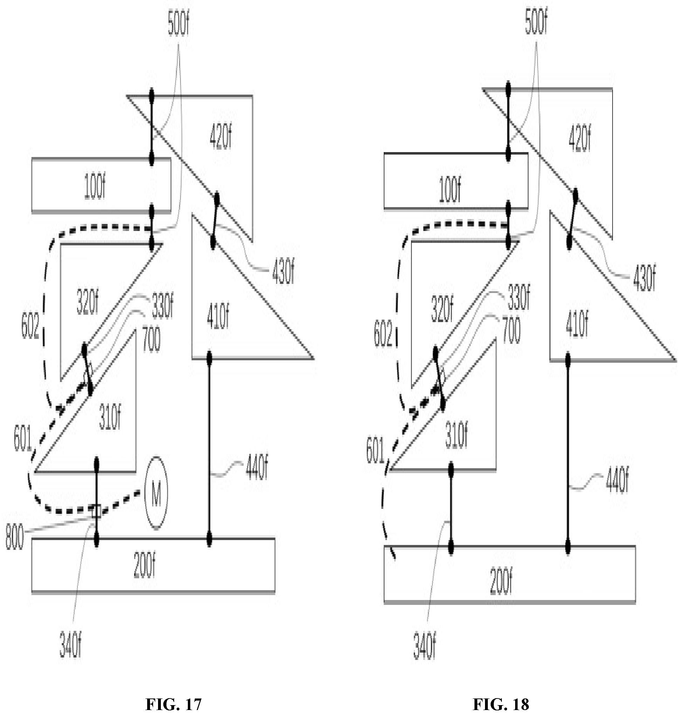

FIG. 17 shows a connection relationship of the main components of the active system corresponding to FIG. 13 with a schematic diagram.

Next, referring to a similar schematic diagram FIG. 18, how to arrange the synchronous rotating device in the passive system is introduced.

In the passive system, the first connecting disc 100f does not have the rotational freedom, and the other end of the first connecting rod assembly 601 is directly connected with the second connecting disc 200f. That is, compared with the active system, the driving disc 800 is omitted in the passive system.

In the passive system, the rotary transmission disc 700 and the first connecting component 330f are still coaxially provided. Moreover, the rotary transmission disc 700 can rotate relative to the first component 310f and the second component 320f. The other end of the second connecting rod 602 is still connected with a rotating assembly 500f through a ball joint.

In the description of the embodiments of the present disclosure, it needs to be understood that orientation or positional relationship indicated by the terms "perpendicular", "parallel", "upper", "lower", "front", "rear", "left", "right", "vertical", "horizontal", "top", "bottom", "inside", "outside" and the like is based on the orientation or positional relationship shown in the drawings only for convenience of description of the present disclosure and simplification of description rather than indicating or implying that the device or element referred to must have a particular orientation, be constructed and operate in a particular orientation, and thus are not to be construed as limiting the present disclosure. Furthermore, the terms "first" and "second" are used for descriptive purposes only and are not to be construed as indicating or implying relative importance or implying the number of the indicated technical features. Thus, the feature defined by "first" and "second" can explicitly or implicitly include one or more features. In the description of the present disclosure, "a plurality of" means two or more, unless otherwise specifically defined.

In the present disclosure, it should be noted that, unless expressly specified and limited otherwise, the terms "mounting", "connected", "connect" should be understood broadly, e.g., may be either a fixed connection or a detachable connection, or an integrated connection; may be either a mechanical connection or an electric connection; may be either a direct connection or an indirect connection through an intermediate medium; or may be the internal communication between two elements. For those skilled in the art, the specific meanings of the above-mentioned terms in the present disclosure can be understood on a case-by-case basis. The above is only the preferred embodiment of the present disclosure, and is not used to limit the present disclosure. Any modification, equivalent substitution, improvement, etc. made within the spirit and principle of the present disclosure should be included in the scope of protection of the present disclosure.

## Claims

1. A motion system, comprising a first connecting disc, a second connecting disc, and a first motion module, a second motion module and a rotating assembly arranged between the first connecting disc and the second connecting disc;
wherein the first motion module and the second motion module are oppositely arranged and are both connected with the rotating assembly;
the first motion module comprises a first component and a second component which are connected with each other, two opposite ends of the first component are rotatably connected with the second connecting disc and one end of the second component, respectively, and one end, away from the first component, of the second component is rotatably connected with the rotating assembly;
the second motion module comprises a third component and a fourth component which are connected with each other, two opposite ends of the third component are rotatably connected with the second connecting disc and one end of the fourth component, respectively, and one end, away from the third component, of the fourth component is rotatably connected with the rotating assembly.

2. The motion system according to claim 1, wherein the rotating assembly comprises a first connecting shaft, and a first pillow block bearing and a second pillow block bearing which are sleeved on the first connecting shaft;
the first connecting disc is sleeved on the first connecting shaft, and located above the first pillow block bearing and the second pillow block bearing;
one end, away from the first component, of the second component is sleeved on the first connecting shaft and is connected with an outer ring of the first pillow block bearing; and
one end, away from the third component, of the fourth component is sleeved on the first connecting shaft and is connected with an outer ring of the second pillow block bearing.

3. The motion system according to claim 1 or 2, wherein the first motion module further comprises a first connecting mechanism; the first connecting mechanism comprises a second connecting shaft, and a third pillow block bearing and a fourth pillow block bearing which are sleeved on the second connecting shaft;
one end, adjacent to the first component, of the second component is sleeved on the second connecting shaft and is connected with an outer ring of the third pillow block bearing; and
one end, adjacent to the second component, of the first component is sleeved on the second connecting shaft and is connected with an outer ring of the fourth pillow block bearing.

4. The motion system according to any one of claims 1 to 3, wherein the first motion module further comprises a second connecting mechanism; the second connecting mechanism comprises a third connecting shaft, and a fifth pillow block bearing sleeved on the third connecting shaft;
one end, away from the second component, of the first component is sleeved on the third connecting shaft and is connected with an outer ring of the fifth pillow block bearing
one end, adjacent to the first component, of the second connecting disc is sleeved on the third connecting shaft.

5. The motion system according to any one of claims 1 to 3, wherein the second motion module further comprises a third connecting mechanism; the third connecting mechanism comprises a fourth connecting shaft, and a sixth pillow block bearing and a seventh pillow block bearing which are sleeved on the fourth connecting shaft;
one end, adjacent to the third component, of the fourth component is sleeved on the fourth connecting shaft and is connected with an outer ring of the sixth pillow block bearing
one end, adjacent to the fourth component, of the third component is sleeved on the fourth connecting shaft and is connected with an outer ring of the seventh pillow block bearing.

6. The motion system according to any one of claims 1 to 3, wherein the second motion module further comprises a fourth connecting mechanism; the fourth connecting mechanism comprises a fifth connecting shaft, and an eighth pillow block bearing sleeved on the fifth connecting shaft;
one end, away from the fourth component, of the third component is sleeved on the fifth connecting shaft and is connected with an outer ring of the eighth pillow block bearing
one end, adjacent to the third component, of the second connecting disc is sleeved on the fifth connecting shaft.

7. The motion system according to claim 1, wherein the rotating assembly comprises a gear assembly and a first bearing assembly connected with each other;
one end, away from the first component, of the second component is embedded inside the first bearing assembly and is abutted against the gear assembly; and
one end, away from the third component, of the fourth component is sleeved outside the first bearing assembly and is abutted against the gear assembly.

8. The motion system according to claim 7, wherein the gear assembly comprises a gear, and a connector; the gear is connected with the first bearing assembly through the connector;
an outer gear ring in fitting with the gear is provided at one end, abutting against the gear assembly, of the second component; and
an inner gear ring in fitting with the gear is provided at one end, abutting against the gear assembly, of the fourth component.

9. The motion system according to claim 8, wherein the first bearing assembly comprises a first bearing, and a second bearing sleeved on an outer ring of the first bearing;
one end, away from the first component, of the second component is embedded inside an inner ring of the first bearing;
one end, away from the third component, of the fourth component is sleeved outside an outer ring of the second bearing; and
the gear is connected with the outer ring of the first bearing and an inner ring of the second bearing through the connector .

10. The motion system according to claim 9, wherein the first connecting disc is connected with the outer ring of the first bearing and the inner ring of the second bearing.

11. The motion system according to claim 10, wherein the first motion module further comprises a first connecting mechanism; the first connecting mechanism comprises a second bearing assembly;
one end, adjacent to the first component, of the second component is embedded inside the second bearing assembly; and
one end, adjacent to the second component, of the first component is sleeved outside the second bearing assembly.

12. The motion system according to claim 11, wherein the first connecting mechanism further comprises a first elastic element, and the first elastic element is arranged between the second component and the second bearing assembly.

13. The motion system according to claim 12, wherein the first motion module further comprises a second connecting mechanism; the second connecting mechanism comprises a third bearing assembly;
one end, away from the second component, of the first component is sleeved outside the third bearing assembly; and
one end, adjacent to the first component, of the second connecting disc is embedded inside the third bearing assembly.

14. The motion system according to claim 13, wherein the second connecting mechanism further comprises a second elastic element, and the second elastic element is arranged between the second connecting disc and the third bearing assembly.

15. The motion system according to claim 14, wherein the second motion module further comprises a third connecting mechanism; the third connecting mechanism comprises a fourth bearing assembly;
one end, adjacent to the third component, of the fourth component is embedded inside the fourth bearing assembly; and
one end, adjacent to the fourth component, of the third component is sleeved outside the fourth bearing assembly.

16. The motion system according to claim 15, wherein the third connecting mechanism further comprises a third elastic element, and the third elastic element is arranged between the fourth component and the third bearing assembly.

17. The motion system according to claim 16, wherein the second motion module further comprises a fourth connecting mechanism; the fourth connecting mechanism comprises a fifth bearing assembly;
one end, away from the fourth component, of the third component is sleeved outside the fifth bearing assembly; and
one end, adjacent to the third component, of the second connecting disc is embedded inside the fifth bearing assembly.

18. The motion system according to claim 17, wherein the fourth connecting mechanism further comprises a fourth elastic element, and the fourth elastic element is arranged between the second connecting disc and the fifth bearing assembly.

19. The motion system according to claim 18, wherein the first elastic element and/or the second elastic element and/or the third elastic element and/or the fourth elastic element comprise a spring or a rubber block.

20. The motion system according to claim 1, wherein the rotating assembly comprises a gear assembly and a first bearing assembly connected with each other;
one end, away from the first component, of the second component is embedded inside the first bearing assembly; and
one end, away from the third component, of the fourth component is sleeved outside the first bearing assembly and is connected with the gear assembly.

21. The motion system according to claim 20, wherein the gear assembly comprises an inner gear ring, a gear train meshed with the inner gear ring, and a connector;
the gear train is connected with the first bearing assembly through the connector; and
the inner gear ring is fixedly connected with the fourth component.

22. The motion system according to claim 21, wherein the gear train comprises a sun gear, and at least one planetary gear meshed with the sun gear.

23. The motion system according to claim 21, wherein the first bearing assembly comprises a first bearing, and a second bearing sleeved outside an outer ring of the first bearing;
one end, away from the first component, of the second component is embedded inside an inner ring of the first bearing;
one end, away from the third component, of the fourth component is sleeved outside an outer ring of the second bearing; and
at least one gear in the gear train is connected with the outer ring of the first bearing and an inner ring of the second bearing through the connector.

24. The motion system according to claim 1, wherein the rotating assembly comprises a gear assembly and a first bearing assembly connected with each other;
one end, away from the first component, of the second component is embedded inside the first bearing assembly and is connected with the gear assembly; and
one end, away from the third component, of the fourth component is sleeved outside the first bearing assembly and is connected with the gear assembly.

25. The motion system according to claim 24, wherein the gear assembly comprises a first inner gear ring, a second inner gear ring, a gear train meshed with the first inner gear ring and the second inner gear ring, and a connector;
at least one gear in the gear train is connected with the first bearing assembly through the connector;
the first inner gear ring is fixedly connected with the second component and meshed with one gear in the gear train; and
the second inner gear ring is fixedly connected with the fourth component and meshed with another gear in the gear train.

26. The motion system according to claim 24, wherein the first bearing assembly comprises a first bearing, and a second bearing sleeved on an outer ring of the first bearing;
one end, away from the first component, of the second component is embedded inside an inner ring of the first bearing;
one end, away from the third component, of the fourth component is sleeved outside an outer ring of the second bearing; and
one gear in the gear train is connected with the outer ring of the first bearing and an inner ring of the second bearing through the connector.

27. The motion system according to claim 26, wherein the first connecting disc is connected with the first bearing assembly.

28. The motion system according to claim 1, wherein the rotating assembly comprises a gear assembly, and two first bearing assemblies;
one end, away from the first component, of the second component is sleeved outside one of the first bearing assemblies;
one end, away from the third component, of the fourth component is sleeved outside the other first bearing assembly; and
one end, away from the first component, of the second component is abutted against one end, away from the third component, of the fourth component through the gear assembly.

29. The motion system according to claim 28, wherein the gear assembly comprises a first outer gear ring arranged at one end, away from the first component, of the second component, and a second outer gear ring arranged at one end, away from the third component, of the fourth component;
wherein the first outer gear ring is meshed with the second outer gear ring.

30. The motion system according to claim 28, wherein each first bearing assembly comprises a connecting pillar, a first bearing, and a second bearing;
the first bearing and the second bearing are sleeved on the connecting pillar, and an inner ring of the first bearing and an inner ring of the second bearing are connected with the connecting pillar;
one end, away from the first component, of the second component, or one end, away from the third component, of the fourth component is sleeved outside the first bearing and the second bearing, and is connected with an outer ring of the first bearing and an outer ring of the second bearing.

31. The motion system according to claim 30, wherein the first connecting disc is connected to the first bearing assembly.

32. The motion system according to any one of claims 1 to 6, further comprising a first connecting rod assembly, a second connecting rod assembly, and a rotary transmission disc;
rotating shafts of the first component and the second component, which rotate relative to each other, are coaxially disposed with the rotary transmission disc, and the rotary transmission disc is able to rotate relative to the first component and the second component;
one end of the first connecting rod assembly is connected with the rotary transmission disc through a ball joint, and an other end of the first connecting rod assembly is controlled relative to a position of the rotating shaft between the first component and the second connecting disc; and
one end of the second connecting rod assembly is connected with the rotary transmission disc through a ball joint, and an other end of the second connecting rod assembly is connected with the rotating assembly through a ball joint.

33. The motion system according to claim 32, wherein the other end of the second connecting rod assembly is fixed to the second connecting disc.

34. The motion system according to claim 32, further comprising a driving disc;
rotating shafts of the first component and the second connecting disc, which rotate relative to each other, are coaxially disposed with the driving disc, the driving disc is able to rotate relative to the first component and the second connecting disc, and the driving disc is able to be controlled to rotate around a rotating shaft thereof.
